# EUROPÄISCHE PATENTSCHRIFT

(11) **EP 3 237 770 B1**
(45) Veröffentlichungstag und Bekanntmachung des Hinweises auf die Patenterteilung: **06.11.2019**
(21) Anmeldenummer: 15813726.5
(22) Anmeldetag: 08.12.2015
(51) Int. Cl.: F16C 17/02, F16C 17/03

(54) **FOLIENSEGMENTLAGER, VERFAHREN ZUM EINSTELLEN EINER SPALTGEOMETRIE EINES FOLIENSEGMENTLAGERS SOWIE ENTSPRECHENDES HERSTELLUNGSVERFAHREN**
FOIL SEGMENT BEARING, METHOD FOR SETTING A GAP GEOMETRY OF A FOIL SEGMENT BEARING AND CORRESPONDING PRODUCTION METHOD
PALIER-FEUILLE À SEGMENTS, PROCÉDÉ POUR AJUSTER UNE GÉOMÉTRIE D'INTERVALLE D'UN PALIER-FEUILLE À SEGMENTS ET PROCÉDÉ DE FABRICATION CORRESPONDANT

(30) Priorität: 22.12.2014 DE 102014226807
(43) Veröffentlichungstag der Anmeldung: 01.11.2017
(73) Patentinhaber: Robert Bosch GmbH, 70442 Stuttgart (DE)
(72) Erfinder: VOGT, Andreas, 71272 Renningen (DE); DOEHRING, Jochen, 70439 Stuttgart-Stammheim (DE)
(86) Internationale Anmeldenummer: PCT/EP2015/078924
(87) Internationale Veröffentlichungsnummer: WO 2016/102181

(56) Entgegenhaltungen:
- WO-A1-2014/070046
- CN-A- 104 653 598
- RU-A- 2012 146 614

## Beschreibung

Die Erfindung betrifft ein Foliensegmentlager, Verfahren zum Einstellen einer Spaltgeometrie eines Foliensegmentlagers sowie entsprechendes Herstellungsverfahren.

### Stand der Technik

Folienlager werden bei einer Vielzahl von Anwendungen eingesetzt, besonders in hochdrehenden Anwendungen, zum Beispiel in thermischen Strömungsmaschinen, Turboladern, Kompressoren usw.

Folienlager sind ein spezieller Typ von Gleitlagern. Es sind aerodynamische Lager, die für hohe Drehzahlen ausgelegt sind. Folienlager der ersten Generation bestehen aus der sogenannten Deckfolie, der Tragfolie und dem Lagerrücken. Zur Verbesserung der Stabilität einer Welle in diesem Lagerrücken werden über den Umfang verteilt mehrere, typischerweise drei Dichtungs-Pass-Scheiben (sogenannte "shims") zwischen dem Lagerrücken und der Tragfolie eingelegt. Ohne derartige Dichtungs-Pass-Scheiben erfolgt der aerodynamische Druckaufbau nur an einer Stelle in Wellenumfangsrichtung, nämlich dort, wo die Welle durch eine äußere Kraft bedingt an der Deckfolie anliegt.

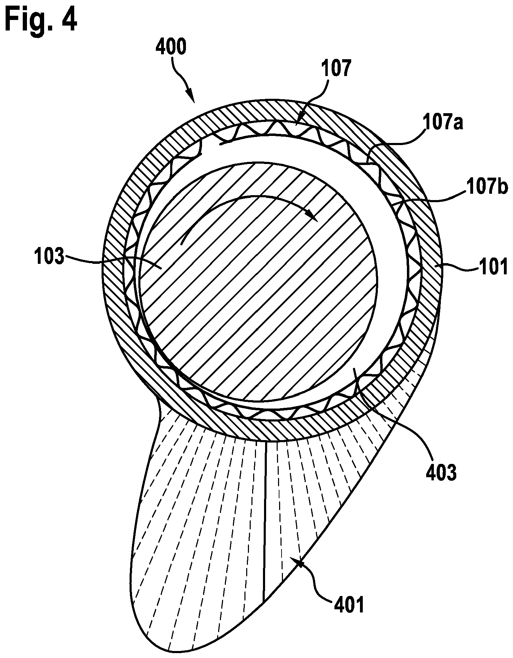

Figur 4 zeigt eine schematische Ansicht zur Erläuterung eines beispielhaften Folienlagers 400 ohne Dichtungs-Pass-Scheiben.

Das Folienlager 400 weist einen Lagerrücken 101, eine Welle 103, eine Folienanordnung 107 mit einer Deckfolie 107b sowie einer Tragfolie 107a auf.

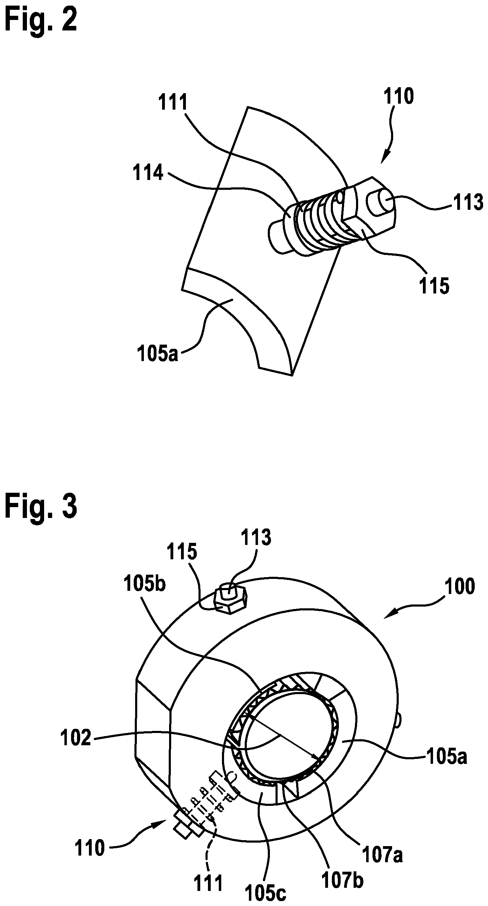

Die Folienanordnung 107 ist in einem Spalt 403 zwischen der Welle 103 und dem Lagerrücken 101 angeordnet. In Fig. 3 liegt die Welle 103 nur an einem Querschnittspunkt an der Deckfolie 107b an. Dadurch entsteht ein sich in Umfangsrichtung verengender Spalt 403, in dem sich der hydro- bzw. aerodynamische Druck aufbauen kann. Die Druckverteilung in dem Folienlager ist mit der Kurve 401 schematisch skizziert.

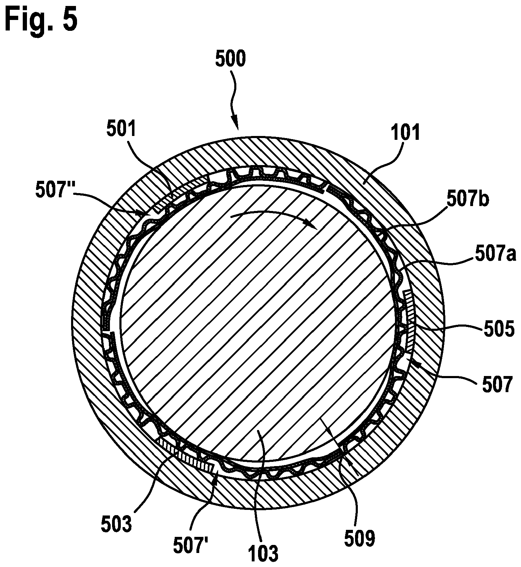

In der Figur 5 ist ein weiteres beispielhaftes Folienlager 500 mit Dichtungs-Pass-Scheiben 501, 503, 505 dargestellt.

Das Folienlager 500 weist einen Lagerrücken 101, eine Welle 103, eine Folienanordnung 507, 507', 507" mit jeweils einer Deckfolie 507b und einer Tragfolie 507a auf. Die Folienanordnung 107 ist in einem Spalt 509 zwischen der Welle 103 und dem Lagerrücken 101 angeordnet. Zur Stabilisierung der Welle sind in dem Spalt zusätzlich die Dichtungs-Pass-Scheiben 501, 503, 505 angeordnet.

In Figur 5 ist zu erkennen, dass durch die Dichtungs-Pass-Scheiben 501, 503, 505 über den Lagerumfang an mehreren Stellen sich verengende Spalte zwischen der Welle 103 und der Deckfolie 507b entstehen. An jeder dieser Verengung baut sich jeweils ein aerodynamischer Druck auf, welcher die Welle trägt und sie in radialer Richtung positioniert. Die Position und die Höhe der Dichtungs-Pass-Scheiben 501, 503, 505 legen die Geometrie des Aufbaus fest. Nach der Montage der Folienanordnung 507, 507', 507" und der Dichtungs-Pass-Scheiben 501, 503, 505 ist die Geometrie des Lagers 500 jedoch nicht mehr veränderbar, die Lage und die Stärke der Druckverläufe sind dann nur noch von den Betriebsbedingungen (Geschwindigkeit, Viskosität des Mediums und der Temperatur) abhängig.

Die US 2004/0042691 A1 offenbart ein Folienlager mit einer Mehrzahl an zylindersegmentförmigen Folien, welche in einem Spalt zwischen einer Welle und einem Lagerrücken angeordnet sind. Der Lagerrücken ist dabei von Pins durchbohrt, wobei die Länge, mit der die Pins aus dem Lagerrücken herausragen von einem dem Lagerrücken umgebenden drehbaren Ring eingestellt werden kann.

Die US 2003/0118257 A1 zeigt ein Folienlager mit einer Vielzahl von piezoelektrischen Aktuatoren. Das Folienlager umfasst ein Gehäuse sowie eine Mehrzahl an Folien zum Tragen einer rotierenden Welle. Die piezoelektrischen Aktuatoren sind dazu eingerichtet, die Steifheit und den Dämpfungskoeffizienten des Lagers einzustellen.

Die Dokumente WO 2014/070046 A1 und RU 2012 146614 A offenbaren jeweils ein Foliensegmentlager nach dem Oberbegriff des Anspruchs 1.

### Offenbarung der Erfindung

Die Erfindung schafft ein Foliensegmentlager nach Anspruch 1, ein Verfahren zum Einstellen einer Spaltgeometrie eines Folienlagers nach Anspruch 9 und ein entsprechendes Herstellungsverfahren nach Anspruch 11.

Bevorzugte Weiterbildungen sind Gegenstand der jeweiligen Unteransprüche.

### Vorteile der Erfindung

Die der vorliegenden Erfindung zugrunde liegende Idee besteht darin, eine Spaltgeometrie eines Folienlagers durch Lagersegmente sowie einen Einstellmechanismus variabel zu halten.

Somit ermöglicht die vorliegende Erfindung einen Ausgleich von Fertigungstoleranzen bei der Herstellung von Folienlagern, aufgrund derer die Spaltgeometrie eines Folienlagers variieren kann. Dabei ist ein zu großer Spalt nachteilig für den Wirkungsgrad des Lagers. Bei einer zu kleinen Spaltgeometrie, kann es zum Anstreifen der Räder am Gehäuse mit anschließendem Ausfall der Strömungsmaschine kommen. Durch das nachträgliche Einstellen der Spaltgeometrie, welche mit der vorliegenden Erfindung bereitgestellt wird, können Fertigungstoleranzen korrigiert werden und insbesondere kann die Welle in radialer Richtung positioniert werden.

Der Einstellmechanismus weist eine Feder und einen Stift auf, wobei die Feder durch den Stift in axialer Richtung positionierbar ist. Durch den gefederten Einstellmechanismus sind auch die Lagersegmente hinterfedert, so dass diese im Einbau nachgeben können, um die Folien nicht zu beschädigen. Ferner stellt sich durch die Hinterfederung der Lagersegmente die Zentrierung der Welle nahezu gänzlich selbstständig ein.

Gemäß einer bevorzugten Weiterbildung weist die Feder eine dynamische Federhärte auf. Von dem Begriff "dynamische Federhärte" sind variable Federhärten, welche einstellbar bzw. steuerbar sind, umfasst. Eine dynamische Federhärte erweist sich als besonders vorteilhaft, da somit die Steifigkeit des Systems an verschiedene Betriebsbedingungen angepasst werden kann.

Gemäß einer weiteren bevorzugten Weiterbildung ist einem Lagersegment jeweils ein Einstellmechanismus zugeordnet und der Einstellmechanismus zumindest teilweise in dem Lagerrücken angeordnet. Durch die genaue Zuordnung von Einstellmechanismen zu Lagersegmenten ist die Position der Lagersegmente individuell und gegebenenfalls verschieden einstellbar. Durch diese Anordnung des Einstellmechanismus im Lagerrücken ist eine besonders flexible und leicht zu handhabende Ausführungsform des Einstellmechanismus bereitgestellt.

Gemäß einer weiteren bevorzugten Weiterbildung ist ein Stift mit jeweils einem Lagersegment verbunden. Demnach können einem Lagersegment mehrere Stifte zugeordnet sein, jedoch einem Stift nur ein Lagersegment. Hierdurch kann ein Lagersegment besonders einfach, jedoch stabil in einer vorbestimmten Position gehalten werden.

Gemäß einer weiteren bevorzugten Weiterbildung weisen die Lagersegmente jeweils eine Ausnehmung auf, welche zu einem Kopfabschnitt der Stifte korrespondierend ausgebildet ist und der Kopfabschnitt in der Ausnehmung angeordnet ist. Durch die Anordnung des Kopfabschnittes eines Stiftes in der Ausnehmung eines Lagersegments kann ein Lagersegment stabil fixiert werden. Gemäß einer weiteren bevorzugten Weiterbildung weist das Foliensegmentlager zumindest drei Lagersegmente auf. Hierdurch kann die Welle präzise, mittig, mit geringem Montage- und Fertigungsaufwand ausgerichtet werden.

Gemäß einer weiteren bevorzugten Weiterbildung sind die Lagersegmente in Umfangsrichtung voneinander durch einen Winkel zueinander beabstandet. Der Winkel zwischen zwei benachbarten Lagersegmentkanten ist zwischen 5° und 20°, insbesondere zwischen 10° und 15° einstellbar. Diese Begrenzungsangaben der Winkel stellen eine maximale Bandbreite der einstellbaren Spaltgeometrie unter ausreichender mechanischer Stabilität des Foliensegmentlagers dar. Gemäß einer weiteren bevorzugten Weiterbildung weist die Folienanordnung eine erste im Wesentlichen ringförmige Folie und eine zweite im Wesentlichen ringförmige Folie auf, wobei die Folien auf einem Lagersegment befestigt sind. Der Begriff "ringförmig" ist insbesondere nicht als Begrenzung auf runde Ausführungsformen zu verstehen. Die Angabe "im Wesentlichen ringförmig" soll angeben, dass eine Folie keinen Vollkreis umlaufen muss, sondern lediglich einen Großteil eines Vollkreises. Um Veränderungen der Folien aufgrund von Temperaturschwankungen vorzubeugen, sind ein erstes und ein zweites Folienende zumindest durch 0,1 mm beabstandet. Um eine ausreichende Stabilität zu gewährleisten, sollen die Folien jedoch zumindest einen Winkel von 350° umlaufen. Die Durch die beiden im Wesentlichen ringförmigen Folien wird eine ausreichende Flexibilität der einstellbaren Spaltgeometrie sowie eine ausreichende Stabilität der Foliensegmentlageranordnung sichergestellt. Die Folien können auf einem Lagersegment mittels eines Fügeverfahrens befestigt werden. Fügeverfahren umfassen das Kleben, das Schrauben, das Klemmen, etc.

### Kurze Beschreibung der Zeichnungen

Weitere Merkmale und Vorteile der vorliegenden Erfindung werden nachfolgend anhand von Ausführungsformen mit Bezug auf die Figuren erläutert.

Es zeigen:
Figur 1 eine schematische Querschnittsansicht eines Foliensegmentlagers gemäß einer Ausführungsform der vorliegenden Erfindung;
Figur 2 eine schematische perspektivische Ansicht eines Einstellmechanismus mit einem Lagersegment gemäß einer Ausführungsform der vorliegenden Erfindung nach Figur 1;
Figur 3 eine perspektivische, schematische Ansicht eines Foliensegmentlagers gemäß Figur 1 gemäß einer Ausführungsform der vorliegenden Erfindung;
Figur 4 eine schematische Querschnittsansicht eines beispielhaften Folienlagers; und
Figur 5 eine schematische Querschnittsansicht eines beispielhaften Folienlagers.

### Ausführungsformen der Erfindung

In den Figuren bezeichnen gleiche Bezugszeichen gleiche bzw. funktionsgleiche Elemente.

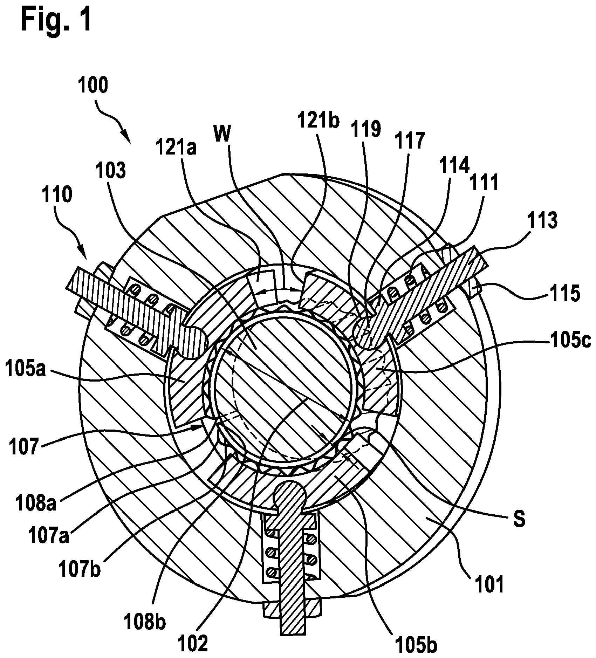

Figur 1 zeigt eine schematische Querschnittsansicht eines Foliensegmentlagers 100 gemäß einer Ausführungsform der vorliegenden Erfindung. In Figur 1 weist das Foliensegmentlager 100 einen Lagerrücken 101, einen Einstellmechanismus 110, eine Folienanordnung 107 sowie Lagersegmente 105a-105c auf.

Dabei wird das Folienlager 100 von einem Lagerrücken 101 begrenzt. Innerhalb des Lagerrückens 101 ist der Einstellmechanismus 110 angeordnet und als Stift 113, welcher von einer Feder 111 in axialer Richtung positioniert wird, ausgebildet. Die Feder 111 kann eine dynamische Federhärte aufweisen. Der Einstellmechanismus 110 ist größtenteils innerhalb des Lagerrückens 101 angeordnet. Zur Verbindung eines Stiftes 113 mit einem Lagersegment weist der Stift 113 einen Kopfabschnitt 117 auf. Abhängig von der eingestellten Federhärte ist die Position eines Stiftes mehr oder weniger steif. Um den Stift 113 in seiner Position zu fixieren, weist der Einstellmechanismus zudem einen Anschlag 115 auf. Die Lagersegmente 105a-105c sind innerhalb des Lagerrückens angeordnet und weisen eine zu dem Kopfabschnitt 117 des Stiftes 113 korrespondierende Ausnehmung 119 auf. Die Lagersegmente 105a-105c sind durch den Kopfabschnitt 117 des Stiftes 113, welcher in der Ausnehmung 119 eingesetzt ist, mit dem Stift verbunden.

Die Folienanordnung 107 umfasst zwei Folien, eine erste Folie 107a und eine zweite Folie 107b. Dabei ist die erste Folie 107a als Tragfolie und die zweite Folie 107b als Deckfolie ausgebildet.

In dieser Ausführungsform sind die Folien 107a, b zylindersegmentförmig ausgebildet. Es sei jedoch darauf hingewiesen, dass die Folien 107a, b auch von anderer Form sein können, ohne den Schutzbereich der Erfindung zu verlassen. Die Folien 107a, b sind an jeweils einem ersten Ende 108a an dem Lagersegment 105a befestigt. Ein zweites Ende 108b der Folien 107a, b ist mit einem geringen Winkel W von etwa 20° von dem ersten Ende 108a der Folien beabstandet und an keinem Lagersegment befestigt. Die Breite des Spaltes S des erfindungsgemäßen Folienlagers 100 kann durch den Einstellmechanismus um ca. 100µm - 400 µm variieren.

Figur 2 zeigt eine schematische perspektivische Ansicht eines Einstellmechanismus 110 mit einem Lagersegment 105a gemäß einer Ausführungsform der vorliegenden Erfindung nach Figur 1.

In Figur 2 ist der Einstellmechanismus 110, welcher durch die Feder 111, den Stift 113 und den Anschlag 115 ausgebildet ist und mit einem Lagersegment 105a verbunden ist, dargestellt. An einem ersten wellenseitigen Ende des Stifts 113 ist der Stift in das Lagersegment 105a eingesetzt. Der Stift 113 weist einen integralen Anschlag 114 auf, welcher mit einer Federkraft beaufschlagt werden kann. An einem lagerrückenseitigen Ende des Stifts 113 ist ein weiterer Anschlag 115, welcher als Mutter ausgebildet ist, angeordnet. Zwischen den beiden Anschlägen 114 und 115 ist die Feder 111, welche als Spiralfeder ausgebildet ist, gespannt. Abhängig von der Position des Anschlagelements 115 übt die Feder 111 eine Kraft, welche in montiertem Zustand zu der Welle 103 gerichtet ist, aus. Die Federkraft wird durch den Stift 113 auf das Lagersegment 105a übertragen, wodurch das Lagersegment 105a in axialer Richtung positioniert wird.

Figur 3 zeigt eine perspektivische, schematische Ansicht eines Foliensegmentlagers gemäß Figur 1.

Obwohl die vorliegende Erfindung anhand bevorzugter Ausführungsbeispiele beschrieben wurde, ist sie darauf nicht beschränkt. Insbesondere sind die genannten Materialien und Topologien nur beispielhaft und nicht auf die erläuternden Beispiele beschränkt.

Das Design des Foliensegmentlagers ist nicht auf die oben beschriebenen Ausführungsformen beschränkt, sondern kann beliebig an die jeweilige Applikation angepasst werden. Beispielsweise können die Anzahl der Federn und Stifte eines Einstellmechanismus an die vorherrschenden Gegebenheiten angepasst werden. Ferner ist die Form des Foliensegmentlagers, des Lagerrückens, der Folienanordnung sowie der Welle nicht auf die dargestellte Zylinderform beschränkt.

Die Erfindung kann bei allen Foliensegmentlagern angewendet werden, deren Aufbau bereits eine sogenannte "bump foil" und eine sogenannte "top foil" beinhaltet.

## Patentansprüche

1. Foliensegmentlager (100) aufweisend:
einen Lagerrücken (101) mit einer Durchgangsöffnung (102), wobei eine Welle (103) in der Durchgangsöffnung derart anordbar ist, dass zwischen der Welle (103) und dem Lagerrücken (101) ein Spalt (S) besteht,
zumindest ein erstes und ein zweites Lagersegment (105a, 105b) mit einer jeweiligen inneren Oberfläche, welche eine Lagerfläche mit einem einstellbaren Umfang definieren, wobei die Lagersegmente (105a, 105b) in dem Lagerrücken (101), von der Welle (103) beabstandet anordbar sind, so dass zwischen der Welle (103) und den Lagersegmenten (105a, 105b) ein Spalt (S) besteht,
eine Folienanordnung (107; 107a, 107b), welche in dem Spalt (S) zwischen den inneren Oberflächen der Lagersegmente (105a, 105b) und der Welle (103) angeordnet ist, und
einen Einstellmechanismus (110), welcher eingerichtet ist, eine Geometrie des Spaltes (S) über eine radiale Positionierung der Lagersegmente (105a, 105b) einzustellen, **dadurch gekennzeichnet, dass** der Einstellmechanismus eine Feder (111) und einen Stift (113) aufweist, wobei die Feder (111) durch den Stift (113) in axialer Richtung positionierbar ist.

2. Foliensegmentlager (100) nach Anspruch 1, wobei die Feder (111) eine dynamische Federhärte aufweist.

3. Foliensegmentlager (100) nach einem der vorstehenden Ansprüche, wobei einem Lagersegment (105a, 105b) jeweils ein Einstellmechanismus (110) zugeordnet ist und der Einstellmechanismus (110) zumindest teilweise in dem Lagerrücken (101) angeordnet ist.

4. Foliensegmentlager (100) nach Anspruch 2 wobei ein Stift (113) mit jeweils einem Lagersegment (105a, 105b) verbunden ist.

5. Foliensegmentlager (100) nach Anspruch 4, wobei die Lagersegmente (105a, 105b) jeweils eine Ausnehmung (119) aufweisen, welche zu einem Kopfabschnitt (117) der Stifte (113) korrespondierend ausgebildet ist und der Kopfabschnitt (117) in der Ausnehmung (119) angeordnet ist.

6. Foliensegmentlager (100) nach einem der vorstehenden Ansprüche, wobei das Foliensegmentlager (100) zumindest drei Lagersegmente (105a, 105b, 105c) aufweist.

7. Foliensegmentlager (100) nach einem der vorstehenden Ansprüche, wobei die Lagersegmente (105a, 105b) in Umfangsrichtung durch einen Winkel (W) voneinander beabstandet sind und der Winkel (W) zwischen zwei benachbarten Lagersegmentkanten (121a, 121b) zwischen 5° und 20°, insbesondere zwischen 10° und 15° einstellbar ist.

8. Foliensegmentlager (100) nach einem der vorstehenden Ansprüche, wobei die Folienanordnung (107) eine erste im Wesentlichen ringförmige Folie (107a) und eine zweite im Wesentlichen ringförmige Folie (107b) aufweist und die Folien (107a, 107b) auf jeweils einem Lagersegment befestigt sind.

9. Verfahren zum Einstellen einer Spaltgeometrie eines Foliensegmentlagers (100) nach einem der vorstehenden Ansprüche, mit den folgenden Schritten:
Bereitstellen des Foliensegmentlagers (100) nach einem der vorstehenden Ansprüche, Bestimmen eines einzustellenden und/oder vorherrschenden Betriebszustandes und/oder einer einzustellenden und/oder vorherrschenden Drehzahl einer in dem Foliensegmentlager (100) gelagerten Welle (103),
Bestimmen einer geeigneten Spaltgeometrie unter Verwendung des bestimmten Betriebszustandes und/oder der bestimmten Drehzahl und
Positionieren des Einstellmechanismus (110) unter Verwendung der bestimmten geeigneten Spaltgeometrie.

10. Verfahren nach Anspruch 9, ferner umfassend einen Schritt des Steuerns einer dynamischen Federhärte der Feder (111), um das Foliensegmentlager (100) an verschiedene Betriebsbedingungen anzupassen.

11. Herstellungsverfahren für ein Foliensegmentlager (100) nach einem der Ansprüche 1 bis 8, mit den folgenden Schritten:
Bereitstellen des Lagerrückens (101),
Bereitstellen des ersten und zweiten Lagersegments (105a, 105b),
Bereitstellen der Folienanordnung (107),
Bereitstellen des Einstellmechanismus (110),
Anordnen des ersten und zweiten Lagersegments (105a, 105b) in der Durchgangsöffnung (102),
Anordnen des Einstellmechanismus innerhalb des Lagerrückens (101),
Verbinden des ersten und des zweiten Lagersegments (105a, 105b) mittels des Einstellmechanismus (110) und
Anordnen der Folienanordnung (107; 107a, 107b) in dem Spalt (S) zwischen den inneren Oberflächen des ersten und zweiten Lagersegments (105a, 105b) und der Welle (103).

## Claims

1. Foil segment bearing (100), having
a bearing back (101) with a passage opening (102) wherein a shaft (103) can be arranged in the passage opening in such a manner that there is a gap (S) between the shaft (103) and the bearing back (101),
at least one first and one second bearing segment (105a, 105b) with a respective inner surface, which surfaces define a bearing surface with an adjustable circumference, wherein the bearing segments (105a, 105b) can be arranged in the bearing back (101) in a manner spaced apart from the shaft (103), and therefore there is a gap (S) between the shaft (103) and the bearing segments (105a, 105b),
a foil arrangement (107; 107a, 107b) which is arranged in the gap (S) between the inner surfaces of the bearing segments (105a, 105b) and the shaft (103), and
a setting mechanism (110) which is configured for setting a geometry of the gap (S) via a radial positioning of the bearing segments (105a, 105b), **characterized in that** the setting mechanism has a spring (111) and a pin (113), wherein the spring (111) can be positioned in the axial direction by the pin (113).

2. Foil segment bearing (100) according to Claim 1, wherein the spring (111) has a dynamic spring hardness.

3. Foil segment bearing (100) according to either of the preceding claims, wherein a bearing segment (105a, 105b) is in each case assigned a setting mechanism (110), and the setting mechanism (110) is at least partially arranged in the bearing back (101).

4. Foil segment bearing (100) according to Claim 2, wherein a pin (113) is connected to in each case one bearing segment (105a, 105b).

5. Foil segment bearing (100) according to Claim 4, wherein the bearing segments (105a, 105b) each have a recess (119) which is designed in a manner corresponding to a head portion (117) of the pins (113), and the head portion (117) is arranged in the recess (119).

6. Foil segment bearing (100) according to one of the preceding claims, wherein the foil segment bearing (100) has at least three bearing segments (105a, 105b, 105c).

7. Foil segment bearing (100) according to one of the preceding claims, wherein the bearing segments (105a, 105b) are spaced apart from each other in the circumferential direction by an angle (W), and the angle (W) between two adjacent bearing segment edges (121a, 121b) can be set between 5° and 20°, in particular between 10° and 15°.

8. Foil segment bearing (100) according to one of the preceding claims, wherein the foil arrangement (107) has a first substantially annular foil (107a) and a second substantially annular foil (107b), and the foils (107a, 107b) are fastened on one bearing segment each.

9. Method for setting a gap geometry of a foil segment bearing (100) according to one of the preceding claims, with the following steps:
providing the foil segment bearing (100) according to one of the preceding claims,
determining an operating state, which is to be set and/or prevails, and/or a rotational speed, which is to be set and/or prevails, of a shaft (103) mounted in the foil segment bearing (100),
determining a suitable gap geometry using the determined operating state and/or the determined rotational speed, and
positioning the setting mechanism (110) using the determined, suitable gap geometry.

10. Method according to Claim 9, further comprising a step of controlling a dynamic spring hardness of the spring (111) in order to adapt the foil segment bearing (100) to different operating conditions.

11. Production method for a foil segment bearing (100) according to one of Claims 1 ot 8, with the following steps:
providing the bearing back (101),
providing the first and second bearing segment (105a, 105b),
providing the foil arrangement (107),
providing the setting mechanism (110),
arranging the first and second bearing segment (105a, 105b) in the through opening (102),
arranging the setting mechanism within the bearing back (101),
connecting the first and the second bearing segment (105a, 105b) by means of the setting mechanism (110), and arranging the foil arrangement (107; 107a, 107b) in the gap (S) between the inner surfaces of the first and second bearing segment (105a, 105b) and the shaft (103).

## Revendications

1. Palier à segments à feuille (100), possédant :
un dos de palier (101) doté d'une ouverture de passage (102), un arbre (103) pouvant être disposé dans l'ouverture de passage de telle sorte qu'un interstice (S) se forme entre l'arbre (103) et le dos de palier (101),
au moins un premier et un deuxième segment de palier (105a, 105b) doté d'une surface intérieure respective qui définit une surface de palier ayant un périmètre réglable, les segments de palier (105a, 105b) pouvant être disposés dans le dos de palier (101) de manière à être espacés de l'arbre (103) de telle sorte qu'un interstice (S) se forme entre l'arbre (103) et les segments de palier (105a, 105b),
un arrangement de feuille (107 ; 107a, 107b) qui est disposé dans l'interstice (S) entre les surfaces intérieures des segments de palier (105a, 105b) et l'arbre (103), et
un mécanisme de réglage (110) qui est conçu pour régler une géométrie de l'interstice (S) par le biais d'un positionnement radial des segments de palier (105a, 105b),
**caractérisé en ce que** le mécanisme de réglage possède un ressort (111) et une broche (113), le ressort (111) pouvant être positionné dans la direction axiale par la broche (113).

2. Palier à segments à feuille (100) selon la revendication 1, le ressort (111) possédant une dureté de ressort dynamique.

3. Palier à segments à feuille (100) selon l'une des revendications précédentes, un mécanisme de réglage (110) étant respectivement associé à un segment de palier (105a, 105b) et le mécanisme de réglage (110) étant au moins partiellement disposé dans le dos de palier (101).

4. Palier à segments à feuille (100) selon la revendication 2, une broche (113) étant respectivement reliée à un segment de palier (105a, 105b).

5. Palier à segments à feuille (100) selon la revendication 4, les segments de palier (105a, 105b) possédant respectivement un évidement (119) qui est configuré en correspondance avec une portion de tête (117) des broches (113) et la portion de tête (117) étant disposée dans l'évidement (119).

6. Palier à segments à feuille (100) selon l'une des revendications précédentes, le palier à segments à feuille (100) possédant au moins trois segments de palier (105a, 105b, 105c).

7. Palier à segments à feuille (100) selon l'une des revendications précédentes, les segments de palier (105a, 105b) étant espacés l'un de l'autre dans la direction périphérique par un angle (W) et l'angle (W) entre deux arêtes de segment de palier (121a, 121b) voisines étant réglable entre 5° et 20°, notamment entre 10° et 15°.

8. Palier à segments à feuille (100) selon l'une des revendications précédentes, l'arrangement de feuille (107) possédant une première feuille (107a) sensiblement de forme annulaire et une deuxième feuille (107b) sensiblement de forme annulaire, et les feuilles (107a, 107b) étant fixées respectivement sur un segment de palier.

9. Procédé de réglage d'une géométrie d'interstice d'un palier à segments à feuille (100) selon l'une des revendications précédentes, comprenant les étapes suivantes :
fourniture du palier à segments à feuille (100) selon l'une des revendications précédentes,
détermination d'un état opérationnel à régler et/ou dominant et/ou d'une vitesse de rotation à régler et/ou dominante d'un arbre (103) supporté dans le palier à segments à feuille (100),
détermination d'une géométrie d'interstice appropriée en utilisant l'état opérationnel déterminé et/ou la vitesse de rotation déterminée et
positionnement du mécanisme de réglage (110) en utilisant la géométrie d'interstice adaptée déterminée.

10. Procédé selon la revendication 9, comprenant en outre une étape de commande d'une dureté de ressort dynamique du ressort (111) afin d'adapter le palier à segments à feuille (100) à différentes conditions de fonctionnement.

11. Procédé de fabrication d'un palier à segments à feuille (100) selon l'une des revendications 1 à 8, comprenant les étapes suivantes :
fourniture d'un dos de palier (101),
fourniture d'un premier et d'un deuxième segment de palier (105a, 105b),
fourniture de l'arrangement de feuille (107),
fourniture du mécanisme de réglage (110),
disposition du premier et du deuxième segment de palier (105a, 105b) dans l'ouverture de passage (102),
disposition du mécanisme de réglage à l'intérieur du dos de palier (101),
liaison du premier et du deuxième segment de palier (105a, 105b) au moyen du mécanisme de réglage (110) et disposition de l'arrangement de feuille (107 ; 107a, 107b) dans l'interstice (S) entre les surfaces intérieures des premier et deuxième segments de palier (105a, 105b) et l'arbre (103).
